# EUROPÄISCHE PATENTANMELDUNG

(11) **EP 2 644 566 A1**
(43) Veröffentlichungstag der Anmeldung: **02.10.2013**
(21) Anmeldenummer: 12162328.4
(22) Anmeldetag: 30.03.2012
(51) Int. Cl.: C01B 33/158

(54) **Verfahren zur Herstellung von Aerogelen**

(71) Anmelder: Construction Research & Technology GmbH, 83308 Trostberg (DE)
(72) Erfinder: Zhizhong, Cai, 83308 Trostberg (DE); Burkhard, Walther, 84518 Garching (DE); McDonnell, Shane, 69008 Lyon (FR); Kutschera, Michael, 67434 Neustadt (DE)

(57) **Zusammenfassung**

Die Erfindung betrifft ein Verfahren zur Herstellung eines organisch modifizierten Aerogels, umfassend die Schritte a) Umsetzung mindestens eines löslichen Salzes eines sauren oder amphoteren sauerstoffhaltigen Molekülanions mit mindestens einer Säure zu einem Hydrogel, b) Modifizierung des Hydrogels mit einer Mischung aus einem Silylierungsmittel mit mindestens einem organischen Rest und einem unpolaren Lösungsmittel, c) unterkritische Trocknung des organisch modifizierten Gels, wobei das Verfahren zwischen Schritt a) und Schritt b) keinen Schritt zum Austausch des Lösungsmittels und/oder zum Entfernen von Salzen umfasst. Weiterhin wird die Verwendung des erhaltenen organisch modifizierten Aerogels als Wärme- oder Schalldämmmaterial, als Katalysatorträger, Gasspeicher oder als Adsorbens offenbart.

## Beschreibung

Die Erfindung betrifft ein Verfahren zur Herstellung von organisch modifizierten Aerogelen, wobei ein lösliches Salz eines sauren oder amphoteren sauerstoffhaltigen Molekülanions mit mindestens einer Säure zu einem Hydrogel umgesetzt und nachfolgend mit einer Mischung eines Silylierungsmittels und eines unpolaren Lösungsmittels behandelt wird. Die Trocknung zu Aerogelen wird unterkritisch durchgeführt. Weiterhin wird die Verwendung des erhaltenen Aerogels als Wärme- oder Schalldämmmaterial, als Katalysatorträger, Gasspeicher oder als Adsorbens offenbart.

Aerogele sind hochporöse Festkörper, bei denen bis zu 99,98 % des Volumens aus Poren bestehen. Aerogele können auf Basis verschiedener Materialien hergestellt werden, wobei Kieselsäure-Aerogele am bekanntesten sind. Sie können aber auch aus anderen sauren oder amphoteren sauerstoffhaltigen Molekülanionen aufgebaut werden, beispielsweise Titanaten oder Aluminaten. Aerogele können hierbei insbesondere über einen Sol-Gel-Prozess unter Bildung eines Hydrogels und nachfolgender Trocknung erhalten werden. Die innere Struktur von Aerogelen besteht aus einem dreidimensionalen Gerüst von Primärpartikeln, die während der Sol-Gel Synthese ohne jede Ordnung aneinander wachsen. Die zwischen den Partikeln befindlichen Hohlräume bilden die Poren.

Es ist bekannt, Hydrogele, insbesondere Kieselsäure-Hydrogele, die durch ansäuern von Wasserglas hergestellt werden können, unter überkritischen Bedingungen zu mikroporösen (Porengröße < 2nm) oder mesoporösen (Porengröße zwischen 2 und 50 nm), räumlich vernetzten Produkten zu trocknen. Ein solches, durch überkritische Trocknung erhaltenes Produkt, wird bei Gelen Aerogel genannt. Bei der überkritischen Trocknung wird die Grenzflächenspannung des in dem mikroporösen oder mesoporösen, räumlich vernetzten Gel enthaltenen Fluids vollständig oder weitgehend aufgehoben. Ziel ist hierbei ein Schrumpfen des mikroporösen oder mesoporösen, räumlich vernetzten Gels beim Trocknen weitgehend zu vermeiden, da beim Schrumpfen charakteristische Eigenschaften des mikroporösen oder mesoporösen, räumlich vernetzten Gels ganz oder teilweise verlorengehen. Anders als bei der herkömmlichen Trocknung ohne besondere Vorkehrung, bei der die Gele eine große Volumenkontraktion erleiden und Xerogele entstehen, findet somit bei der Trocknung in der Nähe des kritischen Punktes nur eine geringe Volumenkontraktion (weniger als 15 Vol.-%) statt.

Der Stand der Technik zur Herstellung von Aerogelen mittels überkritischer Trocknung wird z. B. ausführlich in Reviews in Chemical Engineering, Band 5, Nr. 1-4, S. 157-198 (1988) beschrieben, worin auch die Pionierarbeiten von Kistler Erwähnung finden.

WO-A-95 06 617 betrifft hydrophobe Kieselsäure-Aerogele, die erhältlich sind durch Umsetzung einer Wasserglaslösung mit einer Säure bei einem pH-Wert von 7,5 bis 11, weitgehende Entfernung ionischer Bestandteile aus dem gebildeten Hydrogel durch Waschen mit Wasser oder verdünnten wässrigen Lösungen anorganischer Basen unter Halten des pH-Wertes des Hydrogels im Bereich von 7,5 bis 11, Verdrängung der in dem Hydrogel enthaltenen wässrigen Phase durch einen Alkohol und anschließende überkritische Trocknung des erhaltenen Alkogels.

Aus der WO-A-94 25 149 ist bekannt ein Gel vor dem Trocknen zunächst mit einem Hydrophobierungsmittel zu behandeln. Das hierdurch erhaltene Gel kann unterkritisch getrocknet werden, ohne dass es hierbei zu einer wesentlichen Volumenkontraktion kommt.

Bei der Herstellung von Aerogelen werden auch sehr häufig Alkoxymetallate wie Tetraethylorthosilikat oder Titantetraisopropylat als Rohstoffe eingesetzt. Dies hat den Vorteil, dass bei der Herstellung des Gels keine Salze anfallen, welche anschließend entfernt werden müssten. Ein großer Nachteil liegt allerdings darin, dass Alkoyxmetallate sehr teuer sind. In diesem Zusammenhang ist dem Fachmann bekannt, dass sich der Mechanismus der Sol-Gel-Bildung bei Alkoxymetallaten grundlegend von dem der löslichen Salze eines sauren oder amphoteren sauerstoffhaltigen Molekülanions, wie etwa Natriumsilikat, unterscheidet (C. Jeffrey Brinker, George W. Scherer "Sol-Gel Science: The Physics and Chemistry of Sol-Gel Processing" Academic Press, 1990, Seite 97ff). Je nach zugesetzter Menge an Wasser bilden Alkoxymetallate zunächst wenig verzweigte kettenförmige Strukturen, welche sich später vernetzen. Im Gegensatz dazu polymerisiert beispielweise aus Natriumsilikat und einer Säure hergestellte Kieselsäure direkt zu Partikeln, welche durch weitere Polymerisation größer werden und hierdurch die Primärpartikel bilden.

Hydrophobe Aerogele, insbesondere auf Basis von Siliciumdioxid, werden aufgrund ihrer sehr guten Dämmeigenschaften bereits in Wärmedämmverbundsystemen eingesetzt und haben den Vorteil, dass sie bei gleicher Dämmleistung zu einem deutlich geringeren Aufbau der Wand führen. Ein typischer Wert für die Wärmeleitfähigkeit von Siliciumdioxid-Aerogelen in Luft bei Normaldruck und 20°C liegt zwischen 0,017 und 0,021 W/(m-K). Die Unterschiede in der Wärmeleitfähigkeit der Siliciumdioxid-Aerogele sind im Wesentlichen durch die, je nach Herstellprozess, unterschiedliche Größe der Poren bestimmt, welche im Bereich von 10 bis 100 nm liegt.

Um im technischen Maßstab möglichst günstig Aerogele herzustellen eigenen sich als Rohstoff insbesondere Alkalisilikate, welche zur Bildung des Hydrogels mit organischen oder anorganischen Säuren zur Reaktion gebracht werden. Insbesondere im technischen Maßstab ist es aber schwierig aus diesen günstigen Rohstoffen Hydrogele und im Anschluss Aerogele herzustellen. Die Alkalisilikate werden in der Regel zunächst mit Hilfe eines Ionentauschers entsalzt und nach der Hydrogelbildung wird das Gel mehreren Waschschritten und einem Lösungsmittelaustausch unterzogen. Dies ist aufwändig, da die Ionentauscher regelmäßig regeneriert werden muss und die Waschschritte sehr zeitaufwändig sind und erhebliche Mengen an Abfall produzieren. Aufgabe der vorliegenden Erfindung ist es deshalb, ein prozessual flexibles und wirtschaftliches Verfahren zur Herstellung von Aeroglen auf Basis einer wässrigen Alkalisilikat-Lösung bereit zu stellen. Insbesondere sollte die Anzahl der Prozessschritte verkleinert und der Verbrauch an Lösungsmitteln minimiert werden.

Gelöst wurde diese Aufgabe durch ein Verfahren zur Herstellung eines organisch modifizierten Aerogels, umfassend die Schritte
a) Umsetzung A) mindestens eines löslichen Salzes eines sauren oder amphoteren sauerstoffhaltigen Molekülanions mit B) mindestens einer Säure zu einem Hydrogel,
b) Modifizierung des Hydrogels mit einer Mischung umfassend ein Silylierungsmittel mit mindestens einem organischen Rest und mindestens ein unpolares Lösungsmittel,
c) unterkritische Trocknung des organisch modifizierten Gels,
wobei das Verfahren zwischen Schritt a) und Schritt b) keinen Schritt zum Austausch
des Lösungsmittels und/oder zum Entfernen von Salzen umfasst.

Überraschend wurde gefunden, dass das erfindungsgemäße Verfahren nicht nur die gestellt Aufgabe löst sondern auch ein Aerogel mit einem sehr niedrigen Salzgehalt liefert.

Bei dem mindestens einem sauren oder amphoteren sauerstoffhaltigen Molekülanion handelt es sich bevorzugt um eines auf Basis von Aluminium, Silicium, Phosphor, Zinn, Antimon, Titan, Chrom, Molybdän, Wolfram, Blei, Bismut, Zirkonium, Hafnium, Vanadium, Niob, Tantal, Bor, Arsen, Mangan, Rhenium, Zink, Germanium, Yttrium, Beryllium und Kupfer.

In einer besonders bevorzugten Ausführungsform handelt es sich bei dem Salz des sauren oder amphoteren sauerstoffhaltigen Molekülanions um mindestens eine Verbindung aus der Reihe Alkalimetallsilikat, Alkalimetalltitanat, Alkalimetallaluminat und Alkalimetallphosphat. Insbesondere kann es sich bei dem Kation um mindestens eines aus der Reihe Natrium, Kalium oder Ammonium handeln. In einer besonders bevorzugten Ausführungsform handelt es sich bei dem Salz des sauren oder amphoteren sauerstoffhaltigen Molekülanions um Natriumsilikat oder Kaliumsilikat.

Besonders bevorzugt kann es sich bei dem löslichen Salz eines sauren oder amphoteren sauerstoffhaltigen Molekülanions um eine 1 bis 40 Gew.-%ige Natrium- und/oder Kaliumwasserglas-Lösung handeln.

Als Säure kann bevorzugt mindestens eine aus der Reihe Essigsäure, Oxalsäure, Trifluoressigsäure, Trichloressigsäure, Kohlensäure, Methansulfonsäure, Salzsäure, Flusssäure, Schwefelsäure, Phosphorsäure, Borsäure und Salpetersäure verwendet werden.

Der pH-Wert der Mischung der Komponenten A) und B) spielt hinsichtlich der Geschwindigkeit der Hydrogelbildung eine wesentliche Rolle. Beispielsweise bei der Umsetzung bei Raumtemperatur von Alkalimetallsilikat mit organischen oder anorganischen Säuren benötigt die Hydrogelbildung bei pH 8 bis 9 im Bereich von Sekunden bis zu einigen Minuten, während im pH-Bereich von 2 bis 3 die Hydrogelbildung Stunden bis Tagen dauert. Im Sinne der vorliegenden Erfindung kann der pH-Wert der Mischung der Komponenten A) und B) insbesondere einen Wert zwischen 2,5 und 8, bevorzugt zwischen 3,5 und 7 und besonders bevorzugt zwischen 4 und 5,5 aufweisen. Durch den pH-Wert kann direkt Einfluss auf die Größe der Primärpartikel genommen werden. Beispielsweise können die Primärpartikel bei der Hydrogelbildung auf Basis von Kieselsäure je nach gewählten pH-Wert insbesondere zwischen 2 und 4 nm und der Sekundärpartikel zwischen 10 und 150 nm liegen.

Auf die Geschwindigkeit der Hydrogelbildung und die Primärpartikelgröße kann weiterhin über die Temperatur der eingesetzten Komponenten A) und B) Einfluss genommen werden. Insbesondere liegt die Temperatur der Einsatzstoffe zwischen 10 und 80 °C, bevorzugt zwischen 15 und 30°C.

Wenn es sich bei dem löslichen Salz eines sauren oder amphoteren sauerstoffhaltigen Molekülanions um ein Alkalimetallsilikat handelt, kann in einer besonders bevorzugten Ausführungsform das in Schritt a) erhaltene SiO₂-Gel vor Schritt b) bei 20 bis 100 °C und bei einem pH-Wert von 2 bis 12 für bis zu 12 Stunden gealtert werden. Bevorzugt weist der pH-Wert der Mischung der Komponenten A) und B) nach dem Verlassen der Oberfläche einen Wert zwischen 2,5 und 8, bevorzugt zwischen 3,5 und 7 und besonders bevorzugt zwischen 4 und 6 auf. Als besonders vorteilhaft hat es sich herausgestellt das Gel maximal 3 Stunden, insbesondere maximal 1,5 Stunden und insbesondere bevorzugt maximal 0,5 Stunden zu altern. Hierdurch wird die Modifizierung des Hydrogels in Schritt b) deutlich beschleunigt wobei gleichzeitig nach dem Trocknen ein Produkt erhalten wird, welches sich durch eine geringere Wärmeleitfähigkeit (Lambda-Wert) auszeichnet.

In einer besonders bevorzugten Ausführungsform kann Schritt a) in einem Reaktor durchgeführt werden, welcher aufweist
α) einen um eine Rotationsachse rotierenden Körper K und
β) ein Dosierungssystem
wobei
I) i) das mindestens eines löslichen Salzes eines sauren oder amphoteren sauerstoffhaltigen Molekülanions und
   ii) die mindestens eine Säure
   mit Hilfe des Dosierungssystems auf einen inneren Bereich der Oberfläche des rotierenden Körpers K aufgetragen werden, so dass eine Mischung der Komponenten i) und ii) über die Oberfläche des rotierenden Körpers K zu einem äußeren Bereich der Oberfläche des rotierenden Körpers K fließt,
II) die Mischung die Oberfläche verlässt.

Hierbei ist es besonders bevorzugt wenn der pH-Wert der Mischung nach dem Verlassen der Oberfläche des Körpers K zwischen 2 und 12 liegt.

In einer alternativ bevorzugten Ausführungsform ist es auch möglich die Säure vorzulegen und in diese unter schneller Durchmischung das mindestens eines löslichen Salz eines sauren oder amphoteren sauerstoffhaltigen Molekülanions einzubringen.

In einer bevorzugten Variante des Verfahrens wird das erhaltene Gel nach Schritt a) und/oder einem nachfolgenden Verfahrensschritt zerkleinert. Durch die Zerkleinerung des Hydrogels wird eine schnellere Modifizierung in Schritt b) sowie eine schnellere Trocknung in Schritt c) möglich. Zur Zerkleinerung des Gels sind alle dem Fachmann bekannten Verfahren geeignet, insbesondere lassen sich Niederdruckextruder einsetzen. In einer bevorzugten Ausführungsform wird das Hydrogel in Partikel mit einem Durchmesser zwischen 1,5 und 4 mm zerkleinert. Die zerkleinerten Hydrogele sind in den weiteren Verfahrensschritten, insbesondere während der Modifizierung in Schritt b) und der Trocknung in Schritt c) formstabil.

In einer bevorzugten Verfahrensvariante kann dem mindestens einen löslichen Salz eines sauren oder amphoteren sauerstoffhaltigen Molekülanions, der mindestens einen Säure und/oder deren Mischung vor der Bildung des Hydrogels Trübungsmittel, insbesondere IR-Trübungsmittel, zugesetzt werden. Zur Reduktion des Strahlungsbeitrags der Wärmeleitfähigkeit können als IR-Trübungsmittel insbesondere Ruß, Aktivkohle, Titandioxid, Eisenoxide, Zirkondioxid oder Mischungen derselben eingesetzt werden.

Bevorzugte Gruppen des in Schritt b) eingesetzten Silylierungsmittels mit mindestens einem organischen Rest sind trisubstituierte Silylgruppen der allgemeinen Formel - Si(R)₃, besonders bevorzugt Trialkyl- und/oder Triarylsilylgruppen, wobei jedes R, unabhängig voneinander, ein nicht reaktiver organischer Rest wie C₁-C₁₈-Alkyl oder C₆-C₁₄-Aryl, vorzugsweise C₁-C₆-Alkyl oder Phenyl, insbesondere Methyl, Ethyl, Cyclohexyl oder Phenyl ist, der zusätzlich noch mit funktionellen Gruppen substituiert sein kann. Besonders vorteilhaft zur dauerhaften Hydrophobisierung des Aerogels ist die Verwendung von Trimethylsilylgruppen.

Bei dem in Schritt b) eingesetzten Silylierungsmittel mit mindestens einem organischen Rest kann es sich um mindestens ein Silan der Formeln R¹₄₋ₙSiClₙ oder R¹₄₋ₙSi(OR²)ₙ mit n = 1 bis 3 handeln, wobei R¹ und R² unabhängig voneinander, gleich oder verschieden, C₁-C₆-Alkyl, Cyclohexyl oder Phenyl sind.

Bei dem in Schritt b) eingesetzten Silylierungsmittel mit mindestens einem organischen Rest kann es sich weiterhin um ein Disiloxan der Formel R₃Si-O-SiR₃ und/oder ein Disilazan der Formel R₃Si-N(H)-SiR₃ handeln, wobei die Reste R unabhängig voneinander, gleich oder verschieden, je ein Wasserstoffatom oder ein nicht reaktiver, organischer, linearer, verzweigter, cyclischer, gesättigter oder ungesättigter, aromatischer oder heteroaromatischer Rest und insbesondere unabhängig voneinander, gleich oder verschieden, C₁-C₆-Alkyl, Cyclohexyl oder Phenyl, bedeuten.

Bei dem in Schritt b) eingesetzten Silylierungsmittel mit mindestens einem organischen Rest handelt es sich insbesondere um mindestens eine Verbindung aus der Reihe Hexamethyldisilazan, Dimethyldichlorsilan, Dimethylchlorosilan, Methyltrichlorsilan, Methyldichlorsilan, Ethyltrimethoxysilan, Ethyltriethoxysilan, Triethylethoxysilan, Trimethylethoxysilan, Methyltrimethoxysilan, Ethyltrimethoxysilan, Methoxytrimethylsilan, Trimethylchlorsilan und Triethylchlorosilan. Besonders bevorzugt wird Hexamethyldisilazan als Silylierungsmittel in Schritt b) eingesetzt.

Bei dem unpolaren Lösungsmittel handelt es sich bevorzugt um ein Lösungsmittel welches eine Löslichkeit in Wasser von weniger als 1 g/Liter, insbesondere weniger als 0,5 g/Liter bei 20°C aufweist.

Bei dem unpolaren Lösungsmittel kann es sich insbesondere bevorzugt um mindestens einen Kohlenwasserstoff der Formel CₙH₂ₙ₊₂, wobei n für eine ganze Zahl zwischen 5 und 20, bevorzugt zwischen 5 und 10 steht, handeln, insbesondere Pentan, Hexan, Heptan, Octan, Nonan und Decan.

Weiterhin kann es sich bei dem unpolaren Lösungsmittel um einen halogenierten Kohlenwasserstoff handeln. Insbesondere CₙH(₂ₙ₊₂)₋ₘXₘ, wobei n für eine ganze Zahl zwischen 4 und 20, m für eine ganze Zahl zwischen 1 und (2n+2) und X für Fluor, Chlor, Brom oder lod steht.

Bei dem unpolaren Lösungsmittel kann es sich auch um mindestens ein Cycloalkan und/oder Cycloalken handeln, insbesondere Cyclopentan, Cyclopentadien, Cyclohexan, Cyclohexen, Cyclooctan, Cycloocten, Cyclodecan und Cyclodecen.

Weiterhin kommen als unpolare Lösungsmittel aromatische Kohlenwasserstoffe wie Toluol, Benzol, Xylol, Mesitylen und Ethylbenzol in Frage. In einer weiteren Ausführungsform kann es sich auch um mindestens einen Ether und/oder Ester, insbesondere Diethylether, Essigsäure-n-butylester und Triglyceride (Fette) handeln, welcher bevorzugt eine Löslichkeit in Wasser von weniger als 1 g/Liter, insbesondere weniger als 0,5 g/Liter bei 20°C aufweist.

Besonders bevorzugt besteht die Mischung zur Modifizierung des Hydrogels aus einem Silylierungsmittel mit mindestens einem organischen Rest, besonders bevorzugt Hexamethylendisilazan und einem unpolaren Lösungsmittel, insbesondere Hexan.

Das organisch modifizierte Gel kann insbesondere bei Temperaturen von -30 bis 350°C und Drücken von 0,001 bis 20 bar getrocknet werden. Für die Trocknung sind insbesondere Wirbelschichttrockner, Trommeltrockner, Taumeltrockner, Tellertrockner, Schneckentrockner, Schaufeltrockner, Walzentrockner und Gefriertrockner geeignet. Besonders bevorzugt handelt es sich um Wirbelschichttrockner.

Die vorliegende Erfindung sieht weiterhin ein Verfahren vor, bei welchem dem mindestens einem löslichen Salz eines sauren oder amphoteren sauerstoffhaltigen Molekülanions, der mindestens einen Säure und/oder deren Mischung vor der Bildung des Hydrogels Fasern zusetzt werden. Bei den Fasern handelt es sich bevorzugt um mindestens eine Faser aus der Reihe anorganische Fasern, wie Mineralwolle- und Glasfasern oder organische Polymerfasern, z.B. Polyester-, Polyolefin- und/oder Polyamidfasern, vorzugsweise Polyesterfasern. Die Fasern können runde, trilobale, pentalobale, oktalobale, bändchen-, tannenbaum-, hantel- oder andere sternförmige Profile aufweisen. Ebenso können Hohlfasern verwendet werden. Die Fasern können hierbei auch in Form eines Vlieses vorliegen.

Weiterhin wird durch die vorliegende Erfindung die Verwendung des organisch modifizierten Aerogels als Wärme- oder Schalldämmmaterial, als Katalysatorträger, Gasspeicher oder als Adsorbens vorgesehen.

### Beispiele

Die nachfolgenden erfindungsgemäßen Beispiele wurde auf einem rotierenden Körper K durchgeführt, welcher als glatte Scheibe ausgeführt ist und aus Aluminium besteht. Die Scheibe befindet sich auf einer Achse und ist von einem metallischen Gehäuse umgeben und hat einen Durchmesser von 20 cm. Die Scheibe wird von innen mit einem Wärmeträgeröl temperiert. Vergleichbare Reaktoren werden auch in den Dokumenten WO00/48728, WO00/48729, WO00/48730, WO00/48731 und WO00/48732 näher beschrieben.

### Herstellung von Kieselsäure-Hydrogel:

Eine 21,6 Gew.-%ige Wasserglas-Lösung (Dichte: 1,189 g/ml, pH 11,75) wird mit einer Temperatur von 20°C auf den Mittelpunkt der Scheibe dosiert, wobei der Durchfluss 2,00 ml/Sekunde beträgt. Gleichzeitig wird eine 20 Gew.-%ige Essigsäure-Lösung (Dichte: 1,025 g/ml, pH 1,88) mit einer Temperatur von 20°C mit einer radialen Entfernung vom einem Zentimeter zum Mittelpunkt auf die Scheibe dosiert, wobei der Durchfluss 1,80 ml/Sekunde beträgt. Die Scheibe rotiert mit einer Drehzahl von 500 Umdrehungen pro Minute und wird auf 20°C temperiert. Die Mischung wird nach dem Verlassen der Scheibe gesammelt.
pH der erhaltenen Mischung: 5,05
Feststoffgehalt: 17 Gew.-%
Gelbildungszeit: 14 Minuten

Allgemeine Vorschrift zur Modifizierung des Hydrogels mit einem Silylierungsmittel:

### A)

Die in den oben beschrienen Versuch gesammelte Lösung wird sofort in eine Form (Länge 3 cm, Breite 3 cm, Höhe 3 cm) überführt, wobei die Form bis zum Rand gefüllt wird. Anschließend erfolgt eine Alterung des Gels für eine vorgegebene Zeit (1,5 bis 24 Stunden).

Nach der Alterung wird der erhaltene Gel-Würfel (ca. 25 g) in ein 250 ml Schraubglas gegeben. Es wird so viel Hexan (ca. 45 g) zugegeben bis der Würfel bedeckt ist. Anschließend wird, bezogen auf die Menge an Hexan, 20 Gew.-% Hexamethyldisilazan zugegeben.

Nach einer vorgegeben Zeit (24 Stunden, 48 Stunden oder 72 Stunden) wird der Gel-Würfel entnommen. Die verbliebene Mischung besteht aus einer organischen HexanPhase und einer Wasserphase, in welcher die Salze gelöst sind. Mit einem Messzylinder wird das Volumen der Wasserphase bestimmt.

Der Gel-Würfel wird in 100 ml destilliertes Wasser gegeben und bei 20000 Umdrehungen pro Minute mit dem Ultraturax 60 Sekunden geschert und für 120 Minuten stehen gelassen. Dabei gehen die noch im Gel befindlichen Natrium-Ionen in Lösung. Die Suspension wird über einen Schwarzbandfilter abgenutscht. Die Probe wird nochmals über einen 0,45 µm Spritzenfilter filtriert und 1:40 mit bidestilliertem Wasser verdünnt. Die Menge an ausgewaschenem Salz im Filtrat wird über ICP-Messung (Inductively coupled plasma) bestimmt. Es wird ein Gerät der Firma Spectro A. I. GmbH & Co. KG mit dem Modellnamen "Spectro Ciros Vision" verwendet. Dabei handelt es sich um ein optisches Emissionsspektrometer mit induktiv gekoppelter Plasmaanregung. Die Ergebnisse sind in Tabelle 1 dargestellt.

### B)

Der Versuch wurde analog A) durchgeführt. Allerdings wird der Gel-Würfel nach der Alterung in einem Niederdruckextruder zerkleinert. Es wird ein Gerät der Firma Fuji Paudal Co Ltd. mit dem Modelnamen "Dome Granulator Model DG-L1" verwendet. Der Gel-Würfel wird in den Einfülltrichter gegeben, die Drehzahl der Schnecke wird auf 40 Umdrehung/Minute eingestellt. Der Extruderkopf besteht aus einer domförmigen Lochscheibe mit 2 mm Lochgröße. Der Gel-Würfel wird in dem Extruder zerkleinert und durch die Lochscheibe gedrückt, so dass zylinderförmige Aquagel-Partikeln entstehen. Die erhaltenen Partikel haben einen Durchmesser von ca. 2 mm und eine Länge von 2 bis 4 mm und werden in der gleichen Weise wie oben beschrieben modifiziert und behandelt. Die Ergebnisse sind in Tabelle 2 dargestellt.

### Typische physikalische Werte des getrockneten Gels:

Typische physikalische Werte eines nach 1,5 Stunden Alterung in einem Niederdruckextruder in 2 mm Partikel zerkleinerten Aquagels, welches 24 Stunden mit Hexamethylendisilazan modifiziert und unter Vakuum (35 mbar) in einem Trockenschrank bei 180°C getrocknet wird:

| | |
|---|---|
| Lambda: | 17,4 mW/m·K |
| Porenvolumen: | 4,02 ml/g |
| Porengröße: | 23,0 nm |
| Oberfläche: | 750 m²/g |

Der Lambda-Wert wird bei 1024 mbar und einer Temperatur von 23 °C gemessen. Es wird ein Einplatten-Wärmeleitfähigkeitsmessgerät der Firma Lambda-Meßtechnik GmbH Dresden mit dem Modelnamen "Lambda-Meter EP 500" eingesetzt. Die Messung erfolgte gemäß ISO 8302 bzw. EN 12667

Die N₂-Absorption und Desorption wird mit einem Gerät der Firma Quantachrome GmbH & Co. KG mit dem Modelnamen "Autosorb" gemessen.

| | |
|---|---|
| Porenvolumen: | 4,55 ml/g nach BJH Adsorption, 4,64 BJH Desorption |
| | BJH: Barrett, Joyner und Halenda Methode |
| Porengröße: | 37,2 nm nach BJH Adsorption, 17,4 nm BJH Desorption, |
| Durchschnittlich: | 24,3 nm |
| | BJH: Barrett, Joyner und Halenda Methode |
| Oberfläche: | 746 m²/g nach Multipoint BET |
| | BET: Brunauer-Emmett-Teller Methode |

**Tabelle 1**

| Hydrogel nach Vorschrift A) | | | | | | | |
|---|---|---|---|---|---|---|---|
| Alterung | HMDS (Gew.-%) | Natriumgehalt (Gew.-%) nach | | | Austretende Wassermenge (% zu Sollmenge) | | |
| | | 24 h | 48 h | 72 h | 24 h | 48 h | 72 h |
| 24 h | 20% | 6,6 | 3,2 | 1,9 | 40,1 | 74,8 | 87,0 |
| 1,5 h | 20% | 6,3 | 2,4 | 1,3 | 59,7 | 91,2 | 99,0 |

**Tabelle 2**

| Hydrogel nach Vorschrift B) | | | | | | | |
|---|---|---|---|---|---|---|---|
| Alterung | HMDS (Gew.-%) | Natriumgehalt (Gew.-%) nach | | | Austretende Wassermenge (% zu Sollmenge) | | |
| | | 24 h | 48 h | 72 h | 24 h | 48 h | 72 h |
| 24 h | 20% | 1,6 | 1,2 | 1,4 | 92,8 | 98,7 | 95,4 |
| 1,5 h | 20% | 0,4 | 0,9 | 0,1 | 103,0 | 99,7 | 105,5 |

## Patentansprüche

1. Verfahren zur Herstellung eines organisch modifizierten Aerogels, umfassend die Schritte
a) Umsetzung A) mindestens eines löslichen Salzes eines sauren oder amphoteren sauerstoffhaltigen Molekülanions mit
B) mindestens einer Säure zu einem Hydrogel,
b) Modifizierung des Hydrogels mit einer Mischung umfassend ein Silylierungsmittel mit mindestens einem organischen Rest und mindestens ein unpolares Lösungsmittel,
c) unterkritische Trocknung des organisch modifizierten Gels,
**dadurch gekennzeichnet, dass** das Verfahren zwischen Schritt a) und Schritt b) keinen Schritt zum Austausch des Lösungsmittels und/oder zum Entfernen von Salzen umfasst.

2. Verfahren nach Anspruch 1, **dadurch gekennzeichnet, dass** es sich bei dem mindestens einem sauren oder amphoteren sauerstoffhaltigen Molekülanion um eines auf Basis von Aluminium, Silicium, Phosphor, Zinn, Antimon, Titan, Chrom, Molybdän, Wolfram, Blei, Bismut, Zirkonium, Hafnium, Vanadium, Niob, Tantal, Bor, Arsen, Mangan, Rhenium, Zink, Germanium, Yttrium, Beryllium und Kupfer handelt.

3. Verfahren nach Anspruch 1, **dadurch gekennzeichnet, dass** es sich bei dem Salz des sauren oder amphoteren sauerstoffhaltigen Molekülanions um mindestens eine Verbindung aus der Reihe Alkalimetallsilikat, Alkalimetalltitanat, Alkalimetallaluminat und Alkalimetallphosphat handelt.

4. Verfahren nach Anspruch 1, **dadurch gekennzeichnet, dass** es sich bei dem löslichen Salz eines sauren oder amphoteren sauerstoffhaltigen Molekülanions um eine 1 bis 40 Gew.-%ige Natrium- und/oder Kaliumwasserglas-Lösung handelt.

5. Verfahren nach einem der Ansprüche 1 bis 4, **dadurch gekennzeichnet, dass** als Säure mindestens eine aus der Reihe Essigsäure, Oxalsäure, Trifluoressigsäure, Trichloressigsäure, Kohlensäure, Methansulfonsäure, Salzsäure, Flusssäure, Schwefelsäure, Phosphorsäure, Borsäure und Salpetersäure verwendet wird.

6. Verfahren nach einem der Ansprüche 1 bis 5, **dadurch gekennzeichnet, dass** das in Schritt a) erhaltene Hydrogel vor Schritt b) bei 20 bis 100 °C und bei einem pH-Wert von 2 bis 12 für bis zu 12 Stunden gealtert wird.

7. Verfahren nach einem der Ansprüche 1 bis 6, **dadurch gekennzeichnet, dass** es sich bei dem Silylierungsmittel mit mindestens einem organischen Rest um mindestens eine Verbindung aus der Reihe Hexamethyldisilazan, Dimethyldichlorsilan, Dimethylchlorosilan, Methyltrichlorsilan, Methyldichlorsilan, Ethyltrimethoxysilan, Ethyltriethoxysilan, Triethylethoxysilan, Trimethylethoxysilan, Methyltrimethoxysilan, Ethyltrimethoxysilan, Methoxytrimethylsilan, Trimethylchlorsilan und Triethylchlorosilan handelt.

8. Verfahren nach einem der Ansprüche 1 bis 7, **dadurch gekennzeichnet, dass** es sich bei dem unpolaren Lösungsmittel um mindestens einen Kohlenwasserstoff der Formel CₙH₂ₙ₊₂, wobei n für eine ganze Zahl zwischen 5 und 20 steht, handelt.

9. Verfahren nach einem der Ansprüche 1 bis 8, **dadurch gekennzeichnet, dass** die Mischung zur Modifizierung des Hydrogels aus einem Silylierungsmittel mit mindestens einem organischen Rest und einem unpolaren Lösungsmittel besteht.

10. Verfahren nach einem der Ansprüche 1 bis 9, **dadurch gekennzeichnet, dass** Schritt a) in einem Reaktor durchgeführt wird, welcher aufweist
α ) einen um eine Rotationsachse rotierenden Körper K und
β ) ein Dosierungssystem
wobei
I) i) das mindestens eines löslichen Salzes eines sauren oder amphoteren sauerstoffhaltigen Molekülanions und
ii) die mindestens eine Säure
mit Hilfe des Dosierungssystems auf einen inneren Bereich der Oberfläche des rotierenden Körpers K aufgetragen werden, so dass eine Mischung der Komponenten i) und ii) über die Oberfläche des rotierenden Körpers K zu einem äußeren Bereich der Oberfläche des rotierenden Körpers K fließt,
II) die Mischung die Oberfläche verlässt.

11. Verfahren nach einem der Ansprüche 1 bis 10, **dadurch gekennzeichnet, dass** dem mindestens einem löslichen Salz eines sauren oder amphoteren sauerstoffhaltigen Molekülanions, der mindestens einen Säure und/oder deren Mischung vor der Bildung des Hydrogels Fasern zusetzt werden.

12. Verfahren nach einem der Ansprüche 1 bis 11, **dadurch gekennzeichnet, dass** dem mindestens einen löslichen Salz eines sauren oder amphoteren sauerstoffhaltigen Molekülanions, der mindestens einen Säure und/oder deren Mischung vor der Bildung des Hydrogels Trübungsmittel, insbesondere IR-Trübungsmittel, zusetzt werden.

13. Verfahren nach einem der Ansprüche 1 bis 11, **dadurch gekennzeichnet, dass** das erhaltene Gel nach Schritt a) und/oder einem nachfolgenden Verfahrensschritt zerkleinert wird.

14. Verwendung des nach einem der Ansprüche 1 bis 13 erhaltenen organisch modifizierten Aerogels als Wärme- oder Schalldämmmaterial, als Katalysatorträger, Gasspeicher oder als Adsorbens.
